# FASCICULE DE BREVET EUROPEEN

(11) **EP 3 579 035 B1**
(45) Date de publication et mention de la délivrance du brevet: **14.04.2021**
(21) Numéro de dépôt: 19177271.4
(22) Date de dépôt: 29.05.2019
(51) Int. Cl.: G02B 6/44

(54) **MODULE DE TELECOMMUNICATION OPTIQUE EN MATIERE PLASTIQUE ET DISPOSITIF DE TELS MODULES PIVOTANTS**
OPTISCHES TELEKOMMUNIKATIONSMODUL AUS KUNSTSTOFF, UND VORRICHTUNG FÜR SOLCHE SCHWENKBAREN MODULE
OPTICAL TELECOMMUNICATION MODULE MADE FROM PLASTIC MATERIAL AND DEVICE FOR SUCH PIVOTING MODULES

(30) Priorité: 07.06.2018 FR 1854946
(43) Date de publication de la demande: 11.12.2019
(73) Titulaire: Nexans, 92400 Courbevoie (FR)
(72) Inventeur: DEVAUX, Julien, 08160 Chalandry-Elaire (FR); LIMA, Cyril, 08200 Sedan (FR); THORN, Nicolas, 08090 This (FR)
(74) Mandataire: Ipsilon

(56) Documents cités:
- WO-A1-2018/076249
- CN-Y- 2 437 082
- US-A- 5 100 221
- US-A1- 2006 275 008
- US-A1- 2014 185 992
- US-A1- 2018 097 333
- US-B1- 7 496 269

## Description

L'invention concerne un module de télécommunication optique en matière plastique et un dispositif de tels modules pivotants.

Le document de brevet US 7496269 B1 divulgue un module de télécommunication optique connu.

Un module de télécommunication optique en matière plastique connu est décrit dans le document de brevet WO 2010/077577.

Ce module comporte un boîtier en matière plastique avec une plaque frontale formant un panneau de brassage destiné à recevoir une pluralité de connecteurs, une plaque de fond, une plaque supérieure de couvercle et une plaque arrière.

La plaque de couvercle est pivotante par rapport à la plaque frontale et peut être connectée à la plaque arrière par un agencement de clipsage.

L'installation des composants ou l'intervention sur les composants dans ce module connu s'effectue par ouverture/fermeture de la plaque de couvercle.

Si une telle configuration peut convenir pour des modules de petite capacité, et donc de petite hauteur, et en particulier pour des modules déplacés par translation, elle s'avère peu pratique pour des modules pivotants de grande capacité et donc de grande hauteur égale à plusieurs unités standardisées.

L'invention résout ce problème en proposant un perfectionnement destiné à de tels modules pivotants de grande hauteur.

Pour ce faire, l'invention concerne un module de télécommunication optique comportant un boîtier en matière plastique, ce module comportant un corps avant, une plaque de fond solidaire de ladite plaque d'adaptation frontale, une plaque supérieure de couvercle et une plaque arrière, module caractérisé en ce que ladite plaque arrière est pivotante par rapport à ladite plaque de fond, ladite plaque de couvercle est pivotante par rapport à ladite plaque arrière, et ladite plaque arrière est une platine comportant sur sa face intérieure un ensemble de pièces permettant le guidage et/ou l'épissurage et/ou l'accueil de systèmes de couplage et/ou le stockage de fibres optiques.

Grâce à l'invention, un accès particulièrement aisé des pièces de la platine est assuré par déploiement des plaques, lors d'une intervention sur ces pièces.

De préférence, ladite plaque arrière est pivotante par rapport à ladite plaque de fond sur une plage de 90 degrés.

De préférence, ladite plaque de couvercle est pivotante par rapport à ladite platine sur une plage de 180 degrés.

Lesdites plaques peuvent être pivotantes au moyen d'un agencement de tenons latéraux emboîtés dans des orifices correspondants.

De préférence, ladite plaque de couvercle est apte à être connectée par clipsage sur ledit corps avant en position fermée, non déployée.

Avantageusement, ledit corps avant porte une plaque d'adaptation frontale en métal.

Il est ainsi obtenu un agencement simple et robuste, sans risque de déformation par flexion.

La plaque d'adaptation peut être ouverte sur sa largeur dans le cas d'un simple stockage des fibres optiques dans le module ou être une plaque de brassage pourvu d'orifices destinés à recevoir des connecteurs.

De préférence, ladite plaque d'adaptation frontale est vissée latéralement sur ledit corps.

Ladite plaque d'adaptation frontale peut être en acier.

Avantageusement, ladite plaque d'adaptation frontale est une plaque de brassage pourvue d'une pluralité d'orifices destinés à recevoir chacun au moins un connecteur et chaque dit orifice présente une bride arrière latérale, destinée à pré-contraindre une lame ressort desdits connecteurs.

L'invention concerne également un dispositif de modules pivotants de télécommunication optique en matière plastique comprenant un châssis de montage, au moins un module pivotant de télécommunication optique, tel que précisé ci-dessus, et une pièce de support latérale pour chaque module, ledit module étant destiné à être supporté par le châssis de montage par l'intermédiaire de ladite pièce de support latérale, le dispositif étant caractérisé en ce que la pièce de support latérale comporte au moins un premier agencement de pivotement, le module comportant au moins un second agencement de pivotement latéral configuré pour être clipsé sur ledit premier agencement de pivotement, ledit module comportant deux ensembles d'au moins un agencement de pivotement latéraux symétriques par rapport à un plan transversal central du module et configurés pour être liés l'un sur le ou les premiers(s) agencement(s) de pivotement d'une pièce de support montée à gauche dudit plan ou l'autre sur le ou les premiers(s) agencement(s) de pivotement d'une pièce de support montée à droite dudit plan.

Le même module peut ainsi être monté avec un axe de pivotement à droite ou à gauche en vue de face, ou autrement dit avec une rotation horaire ou antihoraire.

Il est ainsi obtenu une standardisation et une réduction du nombre d'ordres de fabrication. Le stockage est grandement facilité.

Par ailleurs, le montage est facilité sur le terrain puisque le montage du module sur la pièce de support peut s'effectuer sur le terrain. Ainsi, le produit installé peut ne devenir avec un axe de pivotement à gauche ou avec un axe de pivotement à droite qu'au moment de la phase d'installation. Le découplage de cette pièce de support et du module facilite la mise en place.

De préférence, lesdits deux ensembles d'au moins un agencement de pivotement latéraux symétriques par rapport à un plan transversal central du module sont aptes à être clipsés sur le ou les premiers(s) agencement(s) de pivotement d'une pièce de support.

Avantageusement, ledit premier agencement de pivotement est au moins un pivot et ledit second agencement de pivotement est au moins une cavité de pivotement.

Selon un mode de réalisation préféré, ledit premier agencement de pivotement est un pivot et ledit second agencement de pivotement est une cavité de pivotement.

L'invention est décrite ci-après plus en détail à l'aide de figures ne représentant qu'un mode de réalisation préféré de l'invention.

Les figures 1 et 2 sont des vues frontales en perspective d'un dispositif de modules pivotants de télécommunication optique conforme à l'invention avec un module pivotant à droite, en position ouverte et d'une hauteur de plusieurs unités standardisées.

La figure 3 est une vue partielle en perspective arrière d'un dispositif de modules pivotants de télécommunication optique conforme à l'invention avec un module pivotant à droite, en position fermée et d'une hauteur de plusieurs unités standardisées.

Les figures 4 et 5 sont des vues frontale et de dessus d'un connecteur de brassage.

Bien que sur les figures ne soit représenté qu'un seul module, un dispositif de modules pivotants de télécommunication optique comporte en général une pluralité de modules pivotants superposés.

Selon les configurations, ces modules peuvent être plus ou moins hauts et contenir un certain nombre de connexions, de cassettes, d'agencements d'épissurage, etc...

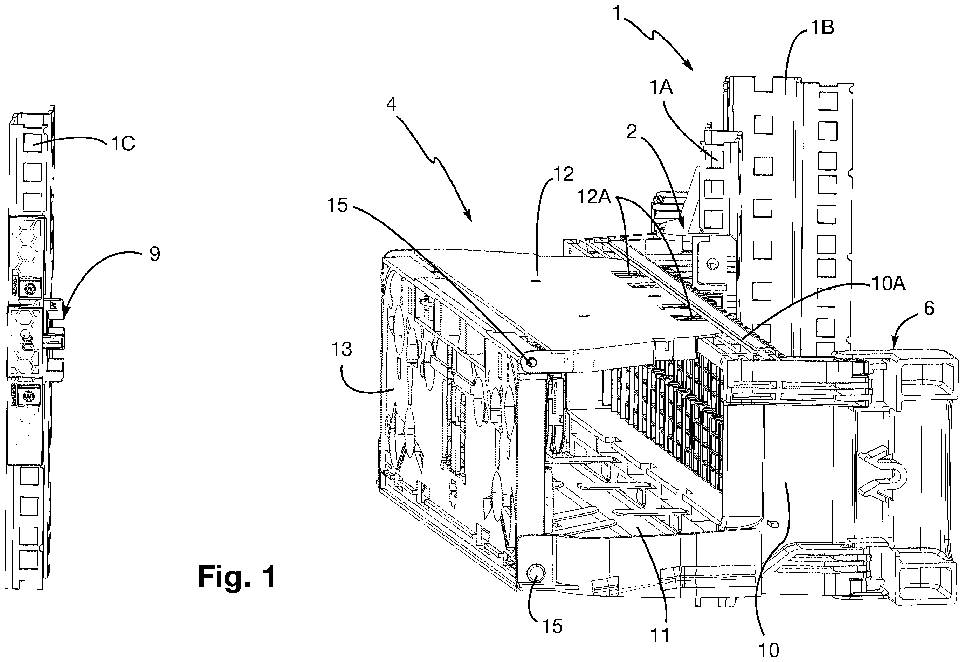

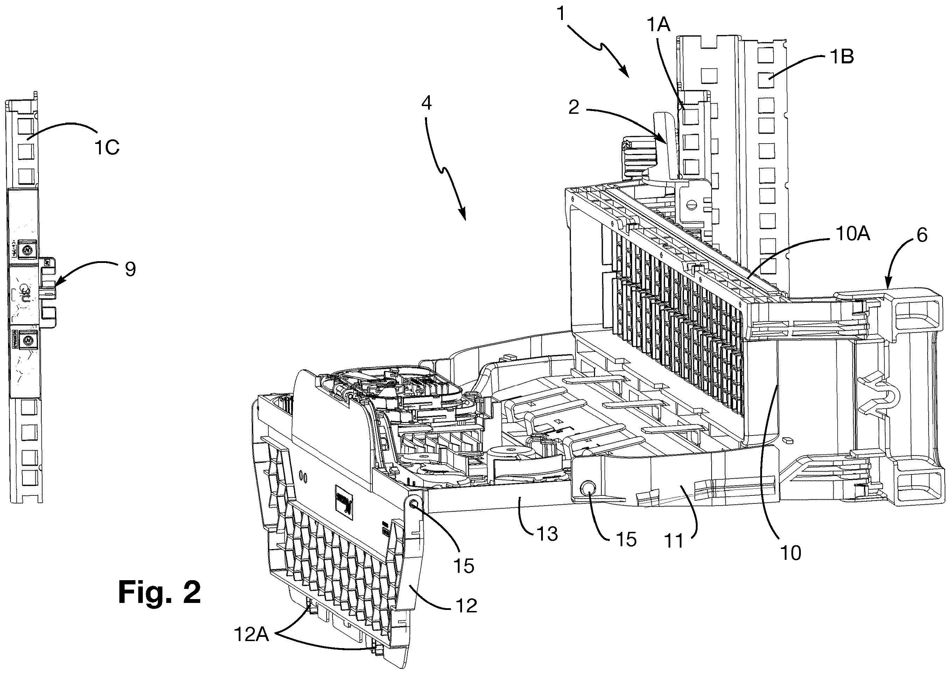

Comme représenté sur les figures 1 et 2, un module de télécommunication optique 4 conforme à l'invention comporte un boîtier en matière plastique.

Ce module comporte un corps avant 10, une plaque de fond 11 solidaire du corps avant 10, une plaque supérieure de couvercle 12 et une plaque arrière 13.

La plaque arrière 13 est pivotante par rapport à la plaque de fond 11 sur une plage de 90 degrés, la plaque de couvercle 12 est pivotante par rapport à la plaque arrière 13 sur une plage de 180 degrés, et cette plaque arrière 13 est une platine apte à recevoir sur sa face intérieure un ensemble de pièces permettant le guidage et/ou l'épissurage et/ou l'accueil de systèmes de couplage et/ou le stockage de fibres optiques, comme visible en position déployée sur la figure 2.

Ces plaques sont pivotantes au moyen d'un agencement de tenons latéraux emboîtés dans des orifices correspondants 15 et la plage de pivotement est assurée par des butées latérales.

La plaque de couvercle 12 est apte à être connectée par clipsage par des agencements 12A sur le corps avant 10 en position fermée, non déployée telle que représenté sur la figure 1.

Le dispositif de modules pivotants de télécommunication optique en matière plastique, par exemple en polycarbonate renforcé de fibres de verre, comporte un châssis de montage 1 supportant pour chaque module 4 une pièce de support 2 comportant ici deux pivots cylindriques de même axe.

La pièce de support 2 est fixée latéralement à droite, ici sur deux profilés 1A, 1B, du châssis de montage. Un troisième profilé 1C actif est situé de l'autre côté du module.

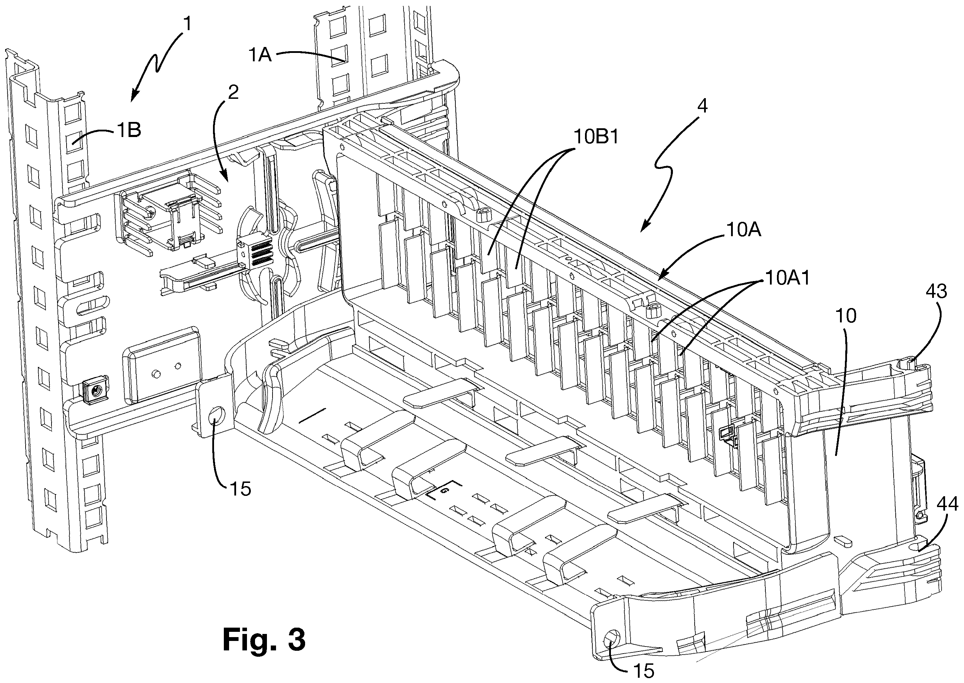

Chaque module 4 comporte deux ensembles de deux cavités de pivotement latérales de même axe dont seules deux 43, 44 sont visibles sur la figure 3 car dépourvues de loquet. Ces deux cavités symétriques latérales sont clipsées sur les pivots cylindriques de la pièce de support 2.

Un tel module est également équipé d'un loquet 6 et un système de fixation et de rattrapage coopérant avec ce loquet est clipsé sur le troisième profilé 1C.

Le loquet 6 est solidarisé au module 4 du côté de sa face frontale opposé aux pivots et cache les autres cavités de pivotement 43, 44. Il coopère avec la pièce de fermeture 9 également clipsée sur le rail 1C correspondant.

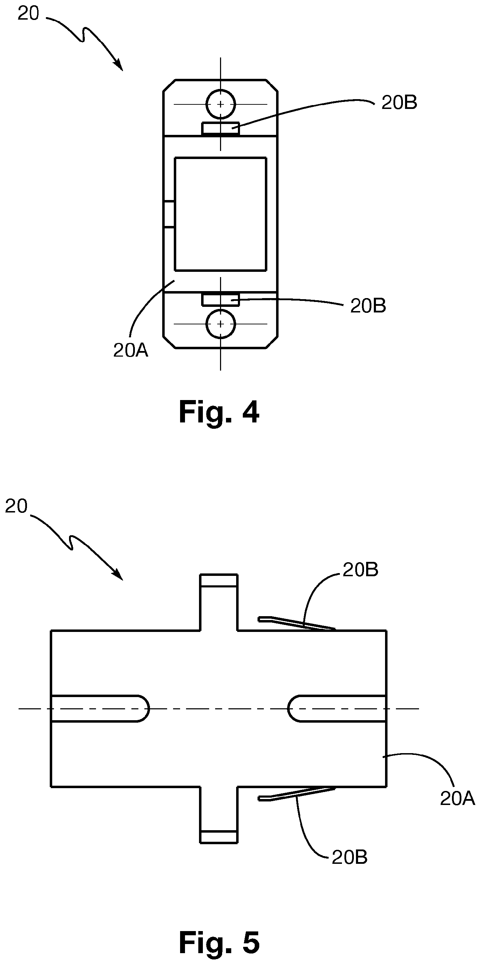

Comme particulièrement visible sur la figure 3, le corps avant 10 porte une plaque d'adaptation frontale 10A qui est une plaque de brassage pourvue d'une pluralité d'orifices 10A1 destinés à recevoir chacun au moins un connecteur et chaque orifice 10A1 présente une bride arrière latérale 10B1, destinée à pré-contraindre une lame ressort des connecteurs 20. Ces connecteurs seront décrits plus loin en référence aux figures 4 et 5.

Chaque module 4 est conformé de façon quasi symétrique par rapport à un plan transversal central du module. Plus précisément, les cavités de pivotement sont symétriques par rapport au plan transversal central du module et aptes à être clipsées, les unes sur les pivots d'une pièce de support 2 montée à gauche dudit plan ou les autres sur les pivots d'une pièce de support 2 montée à droite dudit plan.

Le même module peut ainsi être monté avec un axe de pivotement à droite ou à gauche en vue de face, ou autrement dit avec une rotation horaire ou antihoraire.

Le module de télécommunication optique 4 comporte donc une plaque d'adaptation frontale 10A montée à l'avant du module, en métal, et de préférence en acier.

La plaque d'adaptation frontale 10A est vissée latéralement sur le corps avant 10.

Un connecteur 20 est représenté sur les figures 4 et 5.

Solidarisées à des faces latérales perpendiculaires à la face d'introduction 20A du connecteur, deux lames ressorts 20B assurent le maintien en position de chaque connecteur 20 dans les orifices 10A1.

Grâce à la bride arrière latérale 10B1 équipant chaque orifice 10A1 de la plaque d'adaptation frontale 10A, une des lames ressorts est compressée et pré-contrainte contre cette bride 10B1 lors de son introduction dans l'orifice 10A1. Il est ainsi aisé de connecter le connecteur et également de le déconnecter, par une simple pression sur l'autre lame ressort perpendiculairement à la bride 10B1.

## Revendications

1. Module de télécommunication optique comportant un boîtier, ce module comportant un corps avant (10), une plaque de fond (11) solidaire dudit corps avant (10), une plaque supérieure de couvercle (12) et une plaque arrière (13) pivotante par rapport à ladite plaque de fond (11), ladite plaque de couvercle (12) étant pivotante par rapport à ladite plaque arrière (13), **caractérisé en ce que** le boîtier est en matière plastique, et **en ce que** ladite plaque arrière (13) est une platine comportant sur sa face intérieure un ensemble de pièces permettant le guidage et/ou l'épissurage et/ou l'accueil de systèmes de couplage et/ou le stockage de fibres optiques.

2. Module selon la revendication précédente, **caractérisé en ce que** ladite plaque arrière (13) est pivotante par rapport à ladite plaque de fond (11) sur une plage de 90 degrés.

3. Module selon la revendication 1 ou 2, **caractérisé en ce que** ladite plaque de couvercle (13) est pivotante par rapport à ladite platine (13) sur une plage de 180 degrés.

4. Module selon l'une des revendications précédentes, **caractérisé en ce que** lesdites plaques (12, 13) sont pivotantes au moyen d'un agencement de tenons latéraux emboîtés dans des orifices correspondants (15).

5. Module selon l'une des revendications précédentes, **caractérisé en ce que** ladite plaque de couvercle (12) est apte à être connectée par clipsage sur ledit corps avant (10) en position fermée, non déployée.

6. Module selon l'une des revendications précédentes, **caractérisé en ce que** ledit corps avant (10) porte une plaque d'adaptation frontale (10A) en métal.

7. Module selon la revendication précédente, **caractérisé en ce que** ladite plaque d'adaptation frontale (10A) est vissée latéralement sur ledit corps (10).

8. Module selon la revendication 5 ou 6, **caractérisé en ce que** ladite plaque d'adaptation frontale (10A) est en acier.

9. Module selon l'une des revendications 6 à 8, **caractérisé en ce que** ladite plaque d'adaptation frontale (10A) est une plaque de brassage pourvue d'une pluralité d'orifices (10A1) destinés à recevoir chacun au moins un connecteur et que chaque dit orifice présente une bride arrière latérale (10B1), destinée à pré-contraindre une lame ressort (20B) desdits connecteurs (20).

10. Dispositif de modules pivotants de télécommunication optique en matière plastique comprenant un châssis de montage (1A, 1B, 1C), au moins un module pivotant de télécommunication optique (4) selon l'une des revendications précédentes, et une pièce de support latérale (2, 2', 2") pour chaque module, ledit module étant destiné à être supporté par le châssis de montage (1A, 1B, 1C) par l'intermédiaire de ladite pièce de support latérale , le dispositif étant **caractérisé en ce que** la pièce de support latérale (2) comporte au moins un premier agencement de pivotement, le module comportant au moins un second agencement de pivotement latéral (43', 44') configuré pour être clipsé sur ledit premier agencement de pivotement, ledit module comportant deux ensembles d'au moins un agencement de pivotement latéraux symétriques (43', 44') par rapport à un plan transversal central du module et configurés pour être liés l'un sur le ou les premiers(s) agencement(s) de pivotement d'une pièce de support (2) montée à gauche dudit plan ou l'autre sur le ou les premiers(s) agencement(s) de pivotement d'une pièce de support (2) montée à droite dudit plan.

11. Dispositif selon la revendication précédente, **caractérisé en ce que** lesdits deux ensembles d'au moins un agencement de pivotement latéraux symétriques (43', 44') par rapport à un plan transversal central du module sont aptes à être clipsés sur le ou les premiers(s) agencement(s) de pivotement d'une pièce de support (2).

12. Dispositif selon la revendication précédente, **caractérisé en ce que** ledit premier agencement de pivotement est au moins un pivot et ledit second agencement de pivotement est moins une cavité de pivotement.

## Patentansprüche

1. Optisches Telekommunikationsmodul, umfassend ein Gehäuse, wobei dieses Modul einen vorderen Körper (10), eine Bodenplatte (11), die mit dem vorderen Körper (10) fest verbunden ist, eine obere Deckelplatte (12) und eine hintere Platte (13) umfasst, die mit Bezug auf die Bodenplatte (11) schwenkbar ist, wobei die Deckelplatte (12) mit Bezug auf die hintere Platte (13) schwenkbar ist, **dadurch gekennzeichnet, dass** das Gehäuse aus Kunststoff ist, und dadurch, dass die hintere Platte (13) eine Platine ist, umfassend auf ihrer inneren Seite eine Einheit von Teilen, die die Führung und/oder das Spleißen und/oder die Aufnahme von Kopplungssystemen und/oder das Speichern von Glasfasern ermöglicht.

2. Modul nach dem vorhergehenden Anspruch, **dadurch gekennzeichnet, dass** die hintere Platte (13) mit Bezug auf die Bodenplatte (11) in einem Bereich von 90 Grad schwenkbar ist.

3. Modul nach Anspruch 1 oder 2, **dadurch gekennzeichnet, dass** die Deckelplatte (13) mit Bezug auf die Platine (13) in einem Bereich von 180 Grad schwenkbar ist.

4. Modul nach einem der vorhergehenden Ansprüche, **dadurch gekennzeichnet, dass** die Platten (12, 13) mit Hilfe einer Anordnung von seitlichen Stiften schwenkbar sind, die in entsprechende Öffnungen (15) eingefügt sind.

5. Modul nach einem der vorhergehenden Ansprüche, **dadurch gekennzeichnet, dass** die Deckelplatte (12) ausgelegt ist, um durch Schnappen auf dem vorderen Körper (10) in geschlossener, nicht ausgefahrener Position verbunden zu sein.

6. Modul nach einem der vorhergehenden Ansprüche, **dadurch gekennzeichnet, dass** der vordere Körper (10) eine Platte zur frontalen Anpassung (10A) aus Metall trägt.

7. Modul nach dem vorhergehenden Anspruch, **dadurch gekennzeichnet, dass** die Platte zur frontalen Anpassung (10A) seitlich auf den Körper (10) geschraubt ist.

8. Modul nach Anspruch 5 oder 6, **dadurch gekennzeichnet, dass** die Platte zur frontalen Anpassung (10A) aus Stahl ist.

9. Modul nach einem der Ansprüche 6 bis 8, **dadurch gekennzeichnet, dass** die Platte zur frontalen Anpassung (10A) eine Mischplatte ist, die mit einer Vielzahl von Öffnungen (10A1) versehen ist, die ausgelegt sind, um jeweils mindestens einen Verbinder aufzunehmen, und dadurch, dass jede Öffnung einen seitlichen hinteren Bügel (10B1) aufweist, der ausgelegt ist, um ein Federblatt (20B) der Verbinder (20) vorzuspannen.

10. Vorrichtung von schwenkbaren optischen Telekommunikationsmodulen aus Kunststoff, umfassend einen Montagerahmen (1A, 1B, 1C), mindestens ein schwenkbares optisches Telekommunikationsmodul (4) nach einem der vorhergehenden Ansprüche und einen seitlichen Stützteil (2, 2', 2") für jedes Modul, wobei das Modul ausgelegt ist, um durch den Montagerahmen (1A, 1B, 1C) mit Hilfe des seitlichen Stützteils gestützt zu werden, wobei die Vorrichtung **dadurch gekennzeichnet ist, dass** der seitliche Stützteil (2) mindestens eine erste Schwenkbefestigung umfasst, wobei das Modul mindestens eine zweite seitliche Schwenkbefestigung (43', 44') umfasst, die konfiguriert ist, um auf die erste Schwenkbefestigung geschnappt zu sein, wobei das Modul mindestens zwei Einheiten mit mindestens einer symmetrischen seitlichen Schwenkbefestigung (43', 44') mit Bezug auf eine zentrale Querebene des Moduls aufweist und konfiguriert, so dass die eine auf der oder den ersten Schwenkbefestigung(en) eines Stützteils (2) verbunden ist, das links von der Ebene montiert ist, oder das andere auf der oder den ersten Stützbefestigung(en) eines Stützteils (2) verbunden ist, das rechts von der Ebene montiert ist.

11. Vorrichtung nach dem vorhergehenden Anspruch, **dadurch gekennzeichnet, dass** die zwei Einheiten mit mindestens einer symmetrischen seitlichen Stützanordnung (43', 44') mit Bezug auf eine zentrale Querebene des Moduls ausgelegt sind, um auf der oder den ersten Schwenkbefestigungen(en) eines Stützteils (2) geschnappt zu sein.

12. Vorrichtung nach dem vorhergehenden Anspruch, **dadurch gekennzeichnet, dass** die erste Schwenkbefestigung mindestens ein Drehpunkt ist und die zweite Schwenkbefestigung mindestens ein Schwenkhohlraum ist.

## Claims

1. An optical telecommunication module including a casing, this module including a front body (10), a bottom plate (11) secured to said front body (10), an upper cover plate (12) and a rear plate (13) pivoting relative to said bottom plate (11), said cover plate (12) pivoting relative to the bottom plate (11), said cover plate (12) pivoting relative to said rear plate (13), **characterized in that** said casing is made from plastic, and **in that** said rear plate (13) is a platen including, on its inner face, a set of parts allowing the guiding and/or the splicing and/or the accommodation of coupling systems and/or the storage of optical fibers.

2. The module according to the preceding claim, **characterized in that** said rear plate (13) pivots relative to said bottom plate (11) over a range of 90 degrees.

3. The module according to claim 1 or 2, **characterized in that** said cover plate (13) pivots relative to said platen (13) over a range of 180 degrees.

4. The module according to one of the preceding claims, **characterized in that** said plates (12, 13) pivot using an arrangement of lateral tenons fitted into corresponding orifices (15).

5. The module according to one of the preceding claims, **characterized in that** said cover plate (12) is able to be connected by clipping on said front body (10) in the closed, non-deployed position.

6. The module according to one of the preceding claims, **characterized in that** said front body (10) bears a metal front adapter plate (10A).

7. The module according to the preceding claim, **characterized in that** said front adapter plate (10A) is screwed laterally on said body (10).

8. The module according to claim 5 or 6, **characterized in that** said front adapter plate (10A) is made from steel.

9. The module according to one of claims 6 to 8, **characterized in that** said front adapter plate (10A) is a cross-connect plate provided with a plurality of orifices (10A1) each intended to receive at least one connector and **in that** each said orifice has a lateral rear flange (10B1), intended to prestress a spring leaf (20B) of said connectors (20).

10. A device for pivoting optical telecommunication modules made from plastic comprising a mounting frame (1A, 1B, 1C), at least one pivoting optical telecommunication module (4) according to one of the preceding claims, and a lateral support part (2, 2', 2") for each module, said module being intended to be supported by the mounting frame (1A, 1B, 1C) by means of said lateral support part, the device being **characterized in that** said lateral support part (2) includes at least one first pivoting arrangement, the module including at least one second lateral pivoting arrangement (43', 44') configured to be clipped on said first pivoting arrangement, said module including two symmetrical lateral assemblies of at least one pivoting arrangement (43', 44') relative to a central transverse plane of the module and configured to be connected one on the first pivoting arrangement(s) of a support part (2) mounted to the left of said plane or the other on the first pivoting arrangement(s) of a support part (2) mounted to the right of said plane.

11. The device according to the preceding claim, **characterized in that** said two symmetrical lateral assemblies of at least one pivoting arrangement (43', 44') relative to a central transverse plane of the module are able to be clipped on the first pivoting arrangement(s) of a support part (2).

12. The device according to the preceding claim, **characterized in that** said first pivot arrangement is at least one pivot and said second pivot arrangement is [at] least one pivot cavity.
